(19) Europäisches Patentamt
European Patent Office
Office européen des brevets

(11) Publication number: **0 393 578 B1**

(12) **EUROPEAN PATENT SPECIFICATION**

(45) Date of publication of patent specification: **12.10.94**

(51) Int. Cl.5: **C08F 246/00**, C08F 220/54, C09D 157/04

(21) Application number: **90107249.6**

(22) Date of filing: **17.04.90**

(54) **Aqueous resin composition.**

(30) Priority: **15.04.89 JP 96032/89**

(43) Date of publication of application:
**24.10.90 Bulletin 90/43**

(45) Publication of the grant of the patent:
**12.10.94 Bulletin 94/41**

(84) Designated Contracting States:
**DE FR GB SE**

(56) References cited:
**EP-A- 0 195 931**
**NL-A- 6 911 530**

(73) Proprietor: **NIPPON PAINT CO., LTD.**
**2-1-2, Oyodokita**
**Kita-ku**
**Osaka-shi Osaka 530 (JP)**

(72) Inventor: **Okude, Yoshitaka**
**23-14 Nagisaminami-cho**
**Hirakata-shi, Osaka (JP)**
Inventor: **Umeda, Shinichiro**
**7-2 Ichijoji-higashiura-cho**
**Sakyo-ku, Kyoto-shi, Kyoto (JP)**
Inventor: **Watanabe, Masakazu**
**2-3-4, Katsube**
**Toyonaka-shi, Osaka (JP)**
Inventor: **Miwa, Hiroshi**
**753-8, Azatatsumikakiuchi**
**Minamino, Itami-shi, Hyogo (JP)**
Inventor: **Konishi, Sakuichi**
**1335-14 Komyo-cho**
**Ikoma-shi, Nara (JP)**

(74) Representative: **Hansen, Bernd, Dr. Dipl.-Chem. et al**
**Hoffmann, Eitle & Partner**
**Patent- und Rechtsanwälte,**
**Postfach 81 04 20**
**D-81904 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 393 578 B1

## Description

### FIELD OF THE INVENTION

The present invention relates to an aqueous resin composition.

### BACKGROUND OF THE INVENTION

Japanese Kokai Publication (unexamined) 2031795/1986 discloses an aqueous coating composition for so-called "Wet On Wet" coating method, which contains an acrylic resin prepared from a vinylidene, a hydroxyalkyl (meth)acrylate, N-methylol (meth)acrylamide, (meth)acrylamide, an alkoxymethylated (meth)-acrylamide, (meth)acrylic acid and divinyl benzene. The composition is poor in curing ability and storage stability.

Japanese Kokai Publication (unexamined) 85828/1978 discloses an aqueous emulsion paint which contains an acrylic resin prepared from a hydroxyalkyl (meth)acrylate and a half-ester or half-amide of itaconic acid. The composition is poor in workability, thus causing pinholes and saggings.

### SUMMARY OF THE INVENTION

The present invention provides an aqueous coating composition which has excellent curing ability and good workability. The aqueous resin composition of the present invention comprises an acryl resin having a number average molecular weight of 1,500 to 40,000 which has the following four functional groups;

(a) an amide group represented by

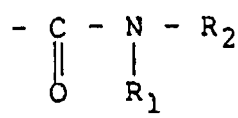

wherein $R_1$ and $R_2$ respectively show a hydrogen atom, an alkyl group having 1 to 8 carbon atoms, a cycloalkyl group having 6 to 12 carbon atoms or an aryl group having 6 to 12 carbon atoms,

(b) a carboxyl group,

(c) an ester, amide or thioester group derived from another carboxyl group bonded to a carbon atom which is adjacent to a carbon atom to which said carboxyl group (b) is attached, and

(d) a hydroxyl group.

The amide group (a) is generally introduced by an acrylic amide represented by the formula;

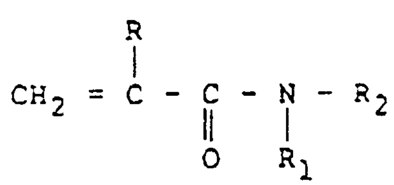

wherein R represents a hydrogen atom or a methyl group, $R_1$ and $R_2$ are the same as mentioned above. Typical examples of the acrylic amides are acrylamide, methacrylamide, N,N-dimethyl acrylamide, N,N-dimethyl methacrylamide, N,N-dibutyl acrylamide, N,N-dibutyl methacrylamide, N,N-dioctyl acrylamide, N,N-dioctyl methacrylamide, N-monobutyl acrylamide, N-monobutyl methacrylamide, N-monooctyl acrylamide and N-monooctyl methacrylamide. Preferred are acrylamide and methacrylamide.

The carboxyl group (b) and the ester, amide or thioester group (c) are generally introduced from one monomer. The monomer is a half ester, half-amide or half-thioester of a dibasic acid anhydride monomer (e.g. maleic anhydride, fumaric anhydride and itaconic anhydride). Alcohols for forming the half-ester with the dibasic acid monomer are those having 1 to 12 carbon atoms, for example methanol, ethanol, propanol, butanol, ethyleneglycol monomethyl ether, ethyleneglycol monoethyl ether, dimethylaminoethanol, diethylaminoethanol, acetol, allyl alcohol and propargyl alcohol. Preferred are butanol, ethylaminoethanol, acetol, allyl alcohol and propargyl alcohol. Amines for forming the half-amide are those having 1 to 12

carbon atoms, for example ethylamine, diethylamide, butylamine, dibutylamine, cyclohexylamine, aniline and naphthylamine. Preferred is aniline. Mercaptanes for forming the half-thioester are those having 1 to 12 carbon atoms, for example, ethyl mercaptane and butyl mercaptane. The half-thioester has bad smell and therefore the half-ester or half-amide is preferred. The reaction for producing the half-ester, half-amide or half-thioester compounds is known to the art, but preferably conducted at a temperature of room temperature to 120 °C, optionally in the presence of a catalyst of tertiary amines.

The hydroxyl group (d) is generally introduced from a monomer having a polymerizable double bond and a hydroxyl group. Typical examples of the hydroxyl group containing ethylenic monomers are 2-hydroxyethyl acrylate, 2-hydroxyethyl methacrylate, 4-hydroxybutyl acrylate, 4-hydroxybutyl methacrylate and a reaction product thereof with a lactone.

The acryl resin of the present invention is prepared by copolymerizing the above mention monomers and optionally other ethylenic copolymerizable monomers. The other ethylenic monomer which is copolymerizable with the above mentioned monomers includes acrylate or methacrylate which may be expressed as "(meth)acrylate", such as methyl (meth)acrylate, ethyl (meth)acrylate, isopropyl (meth)-acrylate, n-propyl (meth)acrylate, n-butyl (meth)acrylate, t-butyl (meth)acrylate, 2-ethylhexyl (meth)acrylate, n-octyl (meth)acrylate, lauryl (meth)acrylate, stearyl (meth)acrylate and dodecyl (meth)acrylate; styrene and a derivative thereof, such as alpha-methylstyrene, o-methylstyrene, m-methylstyrene, p-methylstyrene, p-tert-butylstyrene and benzyl (meth)acrylate; a dibasic acid diester, such as dimethyl itaconate, dimethyl maleate and dimethyl fumarate; a nitrile, such as acrylonitrile and methacrylonitrile; vinyl acetate.

The acryl resin is prepared by copolymerizing a monomer mixture which contains 5 to 40 % by weight, preferably 10 to 25 % by weight of the acrylic amide, 2 to 15 % by weight, preferably 3.5 to 12 % by weight of the half-ester, half-amide or half-thioester of a dibasic acid anhydride monomer, 10 to 52 % by weight, preferably 10 to 40 % by weight of the hydroxyl group containing ethylenic monomer and the balance of the other ethylenic monomer. If the amount of the acrylic amide is less than 5 % by weight, workability is poor. If the amount of the acrylic amide is more than 40 % by weight, water resistance is deteriorated. If the amount of the half-ester, half-amide or half-thioester of a dibasic acid anhydride monomer is less than 2 % by weight, the obtained acryl resin is poor in water solubility or water dispersibility, and if it is more than 15 % by weight, water resistance is poor. If the amount of the hydroxyl group containing ethylenic monomer is less than 10 % by weight, water resistance and durability is poor and if it is more than 52 %, the cured film is too hard and brittle and chipping resistances are poor. The copolymerizing process is known to the art, but generally carried out at a temperature of 80 to 140 °C for 3 to 8 hours in a solvent (e.g. ethoxypropanol, gamma-butyrolactone etc.) in the present of a polymerization initiator. Typical examples of the polymerization initiators are peroxides such as benzoyl peroxide, t-butyl peroxide and cumene hydroperoxide; azo compounds, such as azobisisovaleronitrile and azobisisobutylonitrile. The acryl resin preferably has a number average molecular weight of 1,500 to 40,000, preferably 5,000 to 20,000. The molecular weight is determined by the gel permeation chromatography (GPG) method. Molecular weight of less than 1,500 deteriorates workability and curing ability, while more than 40,000 causes sagging and the like when coating. It is preferred that the acryl resin has a hydroxyl value (mg KOH / g solid content) of 40 to 150, desirably 60 to 100.

At least a portion of the acid groups of the obtained acryl resin is neutralized with a basic material to make the resin water soluble. Neutralization is carried out by conventional methods. Typical examples of the basic materials are monomethylamine, dimethylamine, trimethylamine, monoethylamine, triethylamine, monoisopropylamine, diisopropylamine, diethylenetriamine, triethylenetetramine, monoethanolamine, diethanolamine, triethanolamine, monoispropanolamine, diisopropanolamine, dimethyethanolamine, morpholine, methylmorpholine, piperazine, ammonia, sodium hydroxide, potassium hydroxide, and lithium hydroxide.

The aqueous resin composition mainly contains the above obtained acryl resin and water. It also contains an organic solvent other than water. Typical examples of the organic solvents are alcohols, such as methanol, ethanol, isopropanol, ethoxy ethanol, ethoxy propanol and methoxy propanol; esters, such as butyl acetate, methyl acetate and ethyl acetate; lactones, such as gamma-butyrolactone; hydrocarbons, such as toluene and xylene, ethers, such as dibutyl ether and ethyleneglycol diethyl ether; amides, such as N-methylpyrolidone.

The aqueous resin composition of the present invention can be used for any applications, but preferably it is combined with a curing agent to form an aqueous curable resin composition. Suitable curing agent is melamine resin, preferably water soluble melamine resin (such as Cymel 303 available from Mitsui Toatsu Chemicals Co., Ltd., and Sumimal N-50 W available from Sumitomo Chemical Co., Ltd.). A weight ratio of acryl resin / melamine resin is within the range of 85/15 to 50/50, preferably 80/20 to 60/40. If the melamine resin is less than the above range, curing ability is poor. If it is more than the above range, the cured film is

too hard and brittle.

The curable aqueous resin composition may be combined with pigment and other additives to form paint. Examples of the pigment are art-known inorganic pigment, organic pigment and metallic pigment (e.g. aluminum pigment). Examples of the additives are ultraviolet absorbing agent, defoaming agent and surface controlling agent.

The acryl resin of the present invention has the half-ester, half-amide or half-thioester group of a dibasic acid anhydride monomer, whereby the acid degree of the resin increases. Such high acid degree promotes the reaction between the hydroxyl group and the melamine resin, thus enhancing curing ability. The acryl resin also contains an amide group, whereby workability is improved and the pH of the resin is easily controlled. Especially, since aluminum pigment is significantly affected by the pH value of the paint, the acrylic resin of the present invention can be controlled to a neutral pH range which is suitable for aluminum pigment.

## EXAMPLES

The present invention is illustrated by the following examples.

### Example 1

A 3 liter reaction vessel equipped with a nitrogen gas introducing tube, a temperature controller, a dropping funnel, a stirrer and a decanter was charged with 500 parts by weight of 2-ethoxypropanol and heated to 100 °C. To the vessel was added dropwise a monomer solution which contained 50 parts by weight of styrene, 50 parts by weight of methyl methacrylate, 200 parts by weight of 2-hydroxyethyl methacrylate, 120 parts by weight of 2-ethylhexyl methacrylate, 380 parts by weight of butyl acrylate, a mixture of 100 parts by weight of monobutyl maleate and 100 parts by weight of acrylamide in 300 parts by weight of methanol, and 30 parts by weight of azobisisobutylonitrile. The addition of the monomer solution was conducted at 100 °C for 3 hours with removing methanol using the decanter. It was then mixed for another 30 minutes and a solution containing 50 parts by weight of butyl acetate and 3 parts by weight of t-butylperoxy-2-ethyl hexanoate was added dropwise for 0.5 hours. After finishing the addition, it was kept at 100 °C for 1.5 hours, while 300 parts by weight of methanol was removed. The solvent was then removed under reduced pressure. It was then mixed with 100 parts by weight of dimethylethanolamine and 570 parts by weight of deionized water to obtain a transparent and viscous acryl resin varnish.

### Examples 2 to 10

Aqueous acryl resin varnishes were prepared as generally described in Example 1 from the ingredients shown in Table 1.

Table 1

| Example | 2 | 3 | 4 |
|---|---|---|---|
| Polymerization solvent and its amount (parts) | 2-ethoxy propanol 500 | 2-ethoxy propernol 500 | 2-ethoxy propanol 500 |
| Styrene | 0 | 100 | 50 |
| Methyl methacrylate | 200 | 100 | 250 |
| Buthyl acrylate | 200 | 200 | 100 |
| 2-Ethylhexyl methacrylate | 280 | 240 | 280 |
| Methacrylic acid | 0 | 0 | 0 |
| 2-Hydroxyethyl methacrylate | 140 | 140 | 160 |
| Dibasic monomer derivative | Monomethyl itaconate 80 | Monomethyl itaconate 120 | Monobutyl maleate 35 |
| Acrylic amid | Acrylamide 100 | Acrylamide 100 | Acrylamide 125 |
| Methanol | 300 | 500 | 300 |
| Initiator | Azobisisobutylonitrile 30 | Azobisisobutylonitrile 30 | Azbobisisobutylonitrile 30 |
| Post addition initiator | Same as Exam. 1 | Same as Exam.1 | Same as Exam. 1 |
| Amount of removed methanol | 300 | 500 | 300 |
| Amount of removed solvent | 220 | 220 | 220 |
| Neutralizing amine | Dimethylethanolamine 100 | Dimethylethanolamine 100 | Dimethylethanolamine 70 |
| Deionized water | 570 | 570 | 570 |
| Appearance | Clear | Clear | Clear |
| Non-volatile content (%) | 51 | 52 | 52 |
| $\overline{Mn}$ | 12,000 | 12,000 | 11,000 |

Table 1 continued

| Example | 5 | 6 | 7 |
|---|---|---|---|
| Polymerization solvent and its amount (parts) | 2-ethoxy propanol 500 | Ethylenglycol monobutyl ether 500 | Ethylenglycol monobutyl ether 500 |
| Styrene | 50 | 50 | 0 |
| Methyl methacrylate | 200 | 200 | 200 |
| Buthyl acrylate | 150 | 150 | 100 |
| 2-Ethylhexyl methacrylate | 185 | 120 | 120 |
| Methacrylic acid | 30 | 30 | 30 |
| 2-Hydroxyethyl methacrylate | 200 | 200 | 300 |
| Dibasic monomer derivative | Monobutyl maleate 60 | Monobutyl maleate 100 | *1 100 |
| Acrylic amid | Acrylamide 125 | t-butyl acrylamide 150 | Methacrylamide 150 |
| Methanol | 300 | 400 | 500 |
| Initiator | Azobisisobutylonitrile 20 | Azobisisobutylonitrile 20 | *2 40 |
| Post addition initiator | Same as Exam. 1 | Same as Exam.1 | Same as Exam. 1 |
| Amount of removed methanol | 300 | 400 | 500 |
| Amount of removed solvent | 220 | 220 | 300 |
| Neutralizing amine | Dimethylethanolamine 80 | Dimethylethanolamine 100 | Triethylamine 60 |
| Deionized water | 570 | 570 | 650 |
| Appearance | Clear | Clear | Clear |
| Non-volatile content (%) | 50 | 50 | 52 |
| $\overline{Mn}$ | 18,000 | 17,000 | 10,000 |

Table 1 continued

| Example | 8 | 9 | 10 |
|---|---|---|---|
| Polymerization solvent and its amount (parts) | Ethylenglycol monobutyl ether 500 | Ethylenglycol monobutyl ether 500 | Ethylenglycol monobutyl ether 500 |
| Styrene | 200 | 100 | 50 |
| Methyl methacrylate | 50 | 0 | 100 |
| Buthyl acrylate | 150 | 200 | 150 |
| 2-Ethylhexyl methacrylate | 200 | 80 | 220 |
| Methacrylic acid | 20 | 20 | 20 |
| 2-Hydroxyethyl methacrylate | 180 | 300 | 160 |
| Dibasic monomer derivative | Monomethyl itaconate 100 | Monobutyl itaconate 100 | Itaconic monoanilide 100 |
| Acrylic amid | Methacrylamide 100 | Acrylamide 200 | Acrylamide 200 |
| Methanol | 500 | 500 | 500 |
| Initiator | *2 50 | *2 50 | *2 20 |
| Post addition initiator | Same as Exam. 1 | Same as Exam.1 | Same as Exam. 1 |
| Amount of removed methanol | 500 | 500 | 500 |
| Amount of removed solvent | 300 | 300 | 220 |
| Neutralizing amine | Triethylamine 80 | Triethylamine 80 | Triethylamine 80 |
| Deionized water | 650 | 650 | 650 |
| Appearance | Clear | Clear | Clear |
| Non-volatile content (%) | 52 | 52 | 50 |
| $\overline{Mn}$ | 8,000 | 8,000 | 19,000 |

*1: Mono-N,N-dimethylaminoethyl itaconate

*2: t-Butylperoxy-2-ethyl hexanoate

$\overline{Mn}$(number average molecular weight): GPC method

## Claims

1. An aqueous resin composition comprising an acrylic resin having a number average molecular weight of 1,500 to 40,000 which has the following four functional groups:
   (a) an amide group represented by

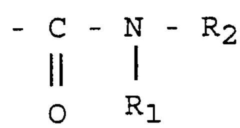

   wherein $R_1$ and $R_2$ respectively represent a hydrogen atom, an alkyl group having 1 to 8 carbon atoms, a cycloalkyl group having 6 to 12 carbon atoms or an aryl group having 6 to 12 carbon atoms;
   (b) a carboxyl group;
   (c) an ester, amide or thioester group derived from another carboxyl group bonded to a carbon atom which is adjacent to a carbon atom to which said carboxyl group (b) is attached; and
   (d) a hydroxyl group;
   being obtainable by copolymerizing
   (1) 5 to 40 percent by weight of an acrylic amide represented by the formula

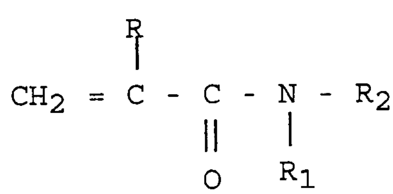

   wherein R represents a hydrogen atom or a methyl group, $R_1$ and $R_2$ are the same as mentioned above;
   (2) 2 to 15 percent by weight of a half-ester, half-amide or half-thioester of a dibasic acid anhydride monomer;
   (3) 10 to 52 percent by weight of a monomer having a polymerizable double bond and a hydroxyl group, and
   (4) optionally at least one other ethylenic copolymerizable monomer as the balance.

2. The aqueous resin composition according to claim 1, wherein said acrylic amide is acryl amide and/or methacryl amide.

3. The aqueous resin composition according to claim 1, wherein said acrylic resin has a hydroxyl value (mg KOH/g solid content) of 40 to 150.

4. An aqueous curable resin composition comprising the aqueous resin composition of claim 1 and a curing agent.

**5.** The aqueous curable resin composition according to claim 4, wherein said curing agent is a water-soluble melamin resin.

## Patentansprüche

**1.** Wässrige Harzzusammensetzung, umfassend ein Acrylharz mit einer Durchschnittsmolekulargewichtszahl von 1500 bis 40000, das die folgenden vier funktionellen Gruppen aufweist:

(a) eine Amidgruppe, dargestellt durch

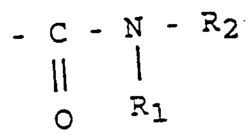

worin $R_1$ und $R_2$ jeweils ein Wasserstoffatom, eine Alkylgruppe mit 1 bis 8 Kohlenstoffatomen, eine Cycloalkylgruppe mit 6 bis 12 Kohlenstoffatomen oder eine Arylgruppe mit 6 bis 12 Kohlenstoffatomen darstellen,

(b) eine Carboxylgruppe,

(c) eine Ester-, Amid- oder Thioestergruppe, die von einer weiteren Carboxylgruppe abgeleitet ist, die an ein Kohlenstoffatom gebunden ist, das einem Kohlenstoffatom benachbart ist, an das die genannte Carboxylgruppe (b) gebunden ist, sowie

(d) eine Hydroxylgruppe,

wobei das Acrylharz erhältlich ist, indem man

(1) 5 bis 40 Gew.% eines Acrylamids, dargestellt durch die Formel:

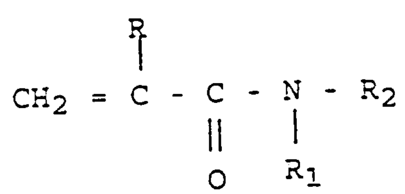

worin R ein Wasserstoffatom oder eine Methylgruppe darstellt, und $R_1$ und $R_2$ wie oben angegeben definiert sind,

(2) 2 bis 15 Gew.% eines Halbesters, Halbamids oder Halbthioesters eines dibasischen Säureanhydridmonomeren,

(3) 10 bis 52 Gew.% eines Monomeren mit einer polymerisierbaren Doppelbindung und einer Hydroxylgruppe und

(4) gegebenenfalls mindestens ein weiteres ethylenisches copolymerisierbares Monomer als Rest

copolymierisert.

**2.** Wässrige Harzzusammensetzung gemäß Anspruch 1, worin das genannte Acrylsäureamid Acrylamid und/oder Methacrylamid ist.

**3.** Wässrige Harzzusammensetzung gemäß Anspruch 1, worin das genannte Acrylharz eine Hydroxylzahl (mg KOH/g Feststoffgehalt) von 40 bis 150 aufweist.

**4.** Wässrige härtbare Harzzusammensetzung, enthaltend die wässrige Harzzusammensetzung von Anspruch 1 und ein Härtungsmittel.

**5.** Wässrige härtbare Harzzusammensetzung gemäß Anspruch 4, worin das genannte Härtungsmittel ein wasserlösliches Melaminharz ist.

## Revendications

**1.** Composition de résine aqueuse comprenant une résine acrylique ayant une masse moléculaire moyenne en nombre de 1 500 à 40 000 et qui contient les quatre groupes fonctionnels suivants :

(a) un groupe amide représenté par la formule :

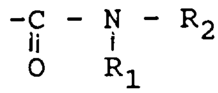

dans laquelle $R_1$ et $R_2$ représentent respectivement un atome d'hydrogène, un groupe alkyle ayant 1 à 8 atomes de carbone, un groupe cycloalkyle ayant 6 à 12 atomes de carbone ou un groupe aryle ayant 6 à 12 atomes de carbone ;

(b) un groupe carboxy ;

(c) un groupe ester, amide ou thioester dérivé d'un autre groupe carboxy lié à un atome de carbone qui est adjacent à un atome de carbone auquel ledit groupe carboxy (b) est attaché ; et

(d) un groupe hydroxy ;

que l'on peut obtenir par copolymérisation de

(1) 5 à 40 pourcent en poids d'un amide acrylique représenté par la formule

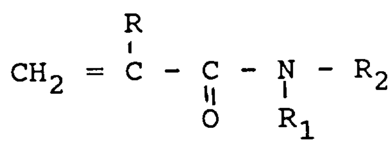

dans laquelle R représente un atome d'hydrogène ou un groupe méthyle et $R_1$ et $R_2$ sont tels que définis ci-dessus ;

(2) 2 à 15 pourcent en poids d'un semi-ester, d'un semi-amide ou d'un semi-thioester d'un monomère anhydride d'acide dibasique ;

(3) 10 à 52 pourcent en poids d'un monomère ayant une double liaison polymérisable et un groupe hydroxy, et

(4) facultativement au moins un autre monomère éthylénique copolymérisable en complément.

**2.** Composition de résine aqueuse selon la revendication 1, dans laquelle ledit amide acrylique est l'acrylamide et/ou le méthacrylamide.

**3.** Composition de résine aqueuse selon la revendication 1, dans laquelle ladite résine acrylique présente un indice d'hydroxy (mg de KOH/g de substances solides) de 40 à 150.

**4.** Composition de résine aqueuse durcissable comprenant la composition de résine aqueuse selon la revendication 1 et un agent de durcissement.

**5.** Composition de résine aqueuse durcissable selon la revendication 4, dans laquelle ledit agent de durcissement est une résine de mélamine soluble dans l'eau.